# EUROPÄISCHE PATENTSCHRIFT

(11) **EP 2 185 994 B1**
(45) Veröffentlichungstag und Bekanntmachung des Hinweises auf die Patenterteilung: **15.01.2020**
(21) Anmeldenummer: 08801611.8
(22) Anmeldetag: 18.08.2008
(51) Int. Cl.: G06F 3/01, G06F 3/03

(54) **VORRICHTUNG ZUR OPTISCHEN NAVIGATION**
OPTICAL NAVIGATION DEVICE
DISPOSITIF DE NAVIGATION OPTIQUE

(30) Priorität: 10.09.2007 DE 102007042984
(43) Veröffentlichungstag der Anmeldung: 19.05.2010
(73) Patentinhaber: Fraunhofer-Gesellschaft zur Förderung der angewandten Forschung e.V., 80686 München (DE)
(72) Erfinder: DUPARRÉ, Jacques, 07745 Jena (DE); DANNBERG, Peter, 07745 Jena (DE); BRÄUER, Andreas, 07646 Schlöben (DE)
(74) Vertreter: Pfenning, Meinig & Partner mbB
(86) Internationale Anmeldenummer: PCT/EP2008/006780
(87) Internationale Veröffentlichungsnummer: WO 2009/033551

(56) Entgegenhaltungen:
- WO-A1-2007/082781
- GB-A- 2 329 786
- GB-A- 2 400 714
- US-A1- 2007 097 249
- US-A1- 2007 109 272
- US-B1- 6 256 016

## Beschreibung

Gegenstand der Erfindung ist eine Vorrichtung zur optischen Navigation nach den Merkmalen des Oberbegriffs des Hauptanspruchs.

Vorrichtungen zur optischen Navigation werden eingesetzt, um bei Datenverarbeitungsanlagen die Umsetzung der Bewegung eines Eingabegeräts, wie z.B. einer Computermaus, gegenüber einer Referenzfläche, oder einem Referenzobjekt in die Bewegung eines Zeigers auf einem Display, z.B. eines Computers, oder Mobiltelefons oder PDA, zu leisten.

Bei den Vorrichtungen zur optischen Navigation wird dabei mittels einer Objektivlinse die so genannte Tracking Surface, oder auch Objektebene, auf einem digitalen Bildsensor abgebildet. Gleichzeitig wird die Objektebene seitlich mittels Laser oder LED und entsprechender Strahlformung beleuchtet. Die Bildaufnahme geschieht in sehr schneller Abfolge (1500 bis 6000 pro Sekunde) hintereinander. Die nacheinander aufgenommenen Bilder werden miteinander korreliert und die Verschiebung der Bilder untereinander wird als Maß für die Weite und Geschwindigkeit der Verschiebung des Eingabegerätes gegenüber der Tracking Surface (oder vice versa) herangezogen. Dies wird wiederum in die Bewegung eines Punktes auf dem Display umgesetzt. Eine Computermaus mit einer Vorrichtung zur optischen Navigation wie im obigen Abschnitt beschrieben wird beispielsweise in der US 6 967 321 B2 oder der US 7 045 775 B2 oder auch in der US 6 256 016 B1 gezeigt.

Bei den Vorrichtungen zur optischen Navigation gemäß des Standes der Technik entstehen jedoch Probleme bei einer weiteren Miniaturisierung des optischen Aufbaus: bei einer gegebenen Diagonale des Bildsensors und einer Verringerung des Abstands zwischen der Ebene des Bildsensors und der Objektebene befinden sich die äußeren Bildbereiche in sehr großen Winkeln relativ zur optischen Achse der Optik. Dadurch wird die Auflösung und die Helligkeit an den Randgebieten des Bildsensors verschlechtert.

Aufgabe der vorliegenden Erfindung ist es, eine Vorrichtung zur optischen Navigation zur Verfügung zu stellen, welche auch bei einer zunehmenden Miniaturisierung und einer zunehmenden Verkürzung des Abstandes zwischen Bildebene und Objektebene auch in den Randbereichen des Bildsensors eine gute Auflösung und Helligkeit am Rand des Bildsensors mit sich bringt.

Die Aufgabe wird durch eine Vorrichtung nach den Merkmalen des Hauptanspruchs gelöst. Dadurch, dass eine Vielzahl von Linsen, welche als Mikrolinsenarray ausgebildet sind, vorhanden ist, und jeweils mindestens eine Mikrolinse einer Bildsensoreinheit des Bildsensors zugeordnet ist, ist es möglich, dass die einer Bildsensoreinheit zugeordnete Mikrolinse einen Teil der abzubildenden Objektteil im Wesentlichen "on-axis" überträgt, d.h., jede Mikrolinse bildet nur einen Teilbereich des Objekts auf die Bildsensoreinheit und die darin befindlichen lichtempfindlichen Flächen ab, was in der Kombination der Vielzahl von arrayartigen Bildsensoreinheiten dazu führt, dass sich Objekt und Bildteile im Wesentlichen direkt gegenüberliegen, d.h. es sich um keine umgekehrte sondern eine aufrechte Abbildung des Objekts handelt.

Dadurch, dass ein einer Bildsensoreinheit gegenüberliegender Objektteil entlang der optischen Achse der zugeordneten Mikrolinse liegt, kann der Bildsensor nahezu beliebig nahe an die Objektebene angenähert werden, da der abzubildende Winkelbereich der Mikrolinse einer Bildsensoreinheit sehr schmal ist, ähnlich einem Facettenauge eines Insekts. Mit einer derartigen Anordnung wird die Auflösung insbesondere am Rand des Bildsensors verbessert und die Lichtstärke fällt im Bereich des Bildsensors nicht ab, da keine starke natürliche Vignettierung am Bildrand vorliegt.

Aufgrund der verbesserten Abbildungseigenschaften des Bildsensors kann die Vorrichtung zur optischen Navigation mit einer geringeren Anzahl von lichtempfindlichen Flächen oder Pixeln ausgestattet werden, da zwar jedes Pixel nur einen sehr kleinen Winkelbereich, diesen jedoch ausgesprochen gut abbilden kann. Es sind also weniger lichtempfindliche Flächen nötig um eine Korrektur bezüglich einer Vignettierung auszugleichen. Ebenso ist es nicht nötig, den Abstand der lichtempfindlichen Flächen sehr klein auszubilden (es sei denn, es ist gewünscht, dass der Bildsensor sehr klein ausfällt), da die Fläche des Bildsensors ein im Wesentlichen gleich großes Objektfeld nahezu ohne Auflösungsverluste abbilden kann.

Da die gängigen Bildsensoren mit lithographischen Strukturierungstechniken hergestellt werden, kann bei der Herstellung der einzelnen Bildsensoreinheiten bzw. des Bildsensoreinheitenarrays mindestens ein Mikrolinsenarray derart aufgebracht werden, dass dieses dem Bildsensorarm zugeordnet ist und/oder auf diesem aufliegt und mit diesem verbunden ist. Auf diese Weise lassen sich in kurzer Zeit eine Vielzahl von Sensoren herstellen. Die Herstellung erfolgt dabei vorteilhafterweise im Wafermaßstab.

Weitere vorteilhafte Weiterbildungen sind in den Neben- und untergeordneten Ansprüchen beschrieben.

Es ist vorteilhaft, wenn die Mikrolinsen derart zueinander ausgerichtet sind, dass ihre optische Achsen parallel zueinander verlaufen. Auf diese Weise können Überschneidungen der auf die einzelnen Bildsensoreinheiten abgebildeten Objektbereiche gering gehalten werden (abhängend von dem abbildbaren Winkelbereich der Mikrolinse), und es ist zudem auf einfache Art und Weise möglich, eine 1:1-Abbildung des Objektfelds auf dem Bildsensor zu erzeugen. Dabei bilden die Mikrolinsen vorteilhafterweise einen Objektfeldbereich auf die Bildsensoreinheit ab, welcher genauso groß ist wie der Abstand der Mikrolinsen bzw. Detektorpixel selbst. Des Weiteren ist es vorteilhaft, wenn die optischen Achsen der einzelnen Mikrolinsen im Wesentlichen senkrecht auf der Objektebene stehen. Auf diese Weise sind die durch die Bildsensoreinheiten aufgenommenen Objektfeldpunkte für jede Bildsensoreinheit nahezu im gleichen Abstand. Dadurch werden gute Voraussetzungen geboten, dass die Beleuchtungsverhältnisse des Objektfelds für jede Bildsensoreinheit im Wesentlichen gleich sind bzw. nicht durch Entfernungseffekte der einzelnen Bildsensoreinheiten verzerrt werden.

Alternativ zu den vorherigen Ausführungen können die optischen Achsen der Mikrolinsen vom Zentrum des Bildsensors zu den Randbereichen hin zunehmend schräger werden, i. d. S., dass, die optische Achse einer Mikrolinse in der Mitte des Bildsensors als Referenzpunkt genommen, die umgebenden optischen Achsen der Mikrolinsen leicht nach außen bzw. nach innen geneigt sind. Durch die schräge Ausführung der optischen Achsen kann eine Abweichung von einer 1:1-Abbildung erreicht werden und es kann ein kleineres Objektfeld auf einen größeren Bildsensor (bei Neigung der optischen Achse nach innen) oder ein größeres Objektfeld auf einen kleineren Bildsensor (bei Neigung der optischen Achse nach außen) hergestellt werden. Mit zunehmender Neigung der optischen Achsen müssen jedoch Effekte wie Astigmatismen oder Bildfeldwölbungen auch bei den Ausbildungen der Mikrolinsen berücksichtigt werden, was jedoch im Stand der Technik bereits bekannt ist. Insbesondere muss man jedoch sicherstellen, dass im gewünschten Arbeitsabstand die den einzelnen Bildsensoreinheiten zugeordneten Objektfeldbereiche aneinander anschließen und keine Lücken zwischen diesen entstehen, womit die Kantenlänge eines einer Bildsensoreinheit zugeordneten Objektfeldbereichs größer ist als der Abstand der Mikrolinsen. Der Arbeitsabstand zwischen Objektebene und Bildsensor ist erfindungsgemäß in einer Größenordnung zwischen 0,1 mm bis 1 mm oder 0,1 mm bis einige Meter.

Besonders vorteilhaft ist es, wenn die Mikrolinsen derart zueinander ausgerichtet sind und derart ausgebildet sind, dass die Objektfeldabschnitte benachbarter Mikrolinsen sich nicht überschneiden, d.h. disjunkt voneinander sind. Besonders vorteilhafterweise befindet sich zwischen den Objektfeldbereichen zweier benachbarter Mikrolinsen auch kein Spalt, so dass das Objektfeld in seiner Gesamtheit ohne redundante Information auf dem Bildsensor übermittelt werden kann. Mit Hilfe der Mikrolinsen werden die Objektfeldbereiche auf die lichtempfindlichen Flächen abgebildet, wobei die lichtempfindlichen Flächen wesentlich kleiner sein können als der abgebildete Objektbereich, ohne dass die globale 1:1-Abbildung aufgehoben wird.

Es ist weiterhin vorteilhaft, wenn eine Bildsensoreinheit mittels eines optisch durchlässigen Substrats mit mindestens einer Mikrolinse verbunden ist, wobei das Substrat aus demselben Material wie die Mikrolinse gefertigt sein kann, aber nicht muss. Auf diese Weise ergeben sich weniger optische Übergangsflächen, was die Berechnung des Strahlengangs vereinfacht und zudem die Anordnung der Mikrolinsen auf den Bildsensoreinheiten einfacher gestaltet. Auf diese Weise werden Reflexionen vermieden, was zu einer besseren Lichtausbeute führt.

Eine weitere vorteilhafte Weiterbildung der Vorrichtung ist es, wenn zwischen einer Mikrolinse und der lichtempfindlichen Fläche der Bildsensoreinheit mindestens eine (transparente) Lochblende in einem lichtundurchlässigen Material (bzw. einer lichtundurchlässigen Schicht)angeordnet ist. Mittels der Lochblende kann ein zusätzlicher Mechanismus eingefügt werden, um ausschließlich das Licht aus dem abzubildenden Objektfeldteil auf die diesem Objektfeldanteil zugeordnete lichtempfindliche Fläche abzubilden. Licht, das aus anderen Richtungen auf die Mikrolinse einfällt und somit auf eine der benachbarten Bildsensoreinheit zugeordneten weiteren lichtempfindlichen Fläche fallen könnte, wird durch die Lochblendenschicht unterdrückt (bzw. absorbiert) und somit ein Übersprechen zwischen benachbarten Bildsensoreinheiten verhindert. Im Falle einer 1:1 Abbildung (senkrechte optische Achsen) sind die Lochblenden mit den jeweiligen Linsen und Detektorpixeln zentriert.

Eine mögliche Ausführungsform der Mikrolinsenanordnung in Bezug auf die Bildsensoreinheiten ist es, wenn die Mikrolinsen in einer Vielzahl von übereinander liegenden Mikrolinsenarrays vorzugsweise zwei, besonders vorzugsweise drei, angeordnet sind. Dabei liegt jeweils eine Mikrolinse des ersten Mikrolinsenarray mit einer Mikrolinse des zweiten oder dritten Mikrolinsenarrays so, dass die Mikrolinsen in Flucht liegen. Besonders vorteilhaft ist die Anordnung der Mikrolinsen zu einer Gabor-Superlinse. Bei dieser Variante der Vorrichtung zur optischen Navigation wird weiterhin ein einer Bildsensoreinheit gegenüberliegender Objektfeldabschnitt auf diesem abgebildet, allerdings tragen nicht nur die in der Verbindungslinie zwischen Objektfeldabschnitt und Bildsensoreinheit gelegenen Mikrolinsen zur Abbildung des Objektfeldteils bei, sondern auch Mikrolinsen, welche dieser Mikrolinse benachbart sind. Durch eine geeignete Anordnung der mehreren Mikrolinsenarrays tragen gleichzeitig mehrere durch die Mikrolinsen gebildete optische Kanäle zur Abbildung eines Objektfeldabschnitts auf eine lichtempfindliche Fläche bei. Der Vorteil besteht darin, dass eine derartige Mikrolinsenanordnung deutlich lichtstärker ist als bei Vorhanden im Wesentlichen nur eines Mikrolinsenarrays, da hier nicht nur ein optischer Kanal, sondern eine Vielzahl von optischen Kanälen zur Formation eines Objektfeldteils auf der lichtempfindlichen Fläche beitragen.

Besonders vorteilhafterweise sind die Mikrolinsenarrays derart angebracht, dass zwischen einem ersten (bzw. zweiten) Mikrolinsenarray und einem zweiten (bzw. dritten) Mikrolinsenarray ein Abstandsarray mit in Richtung der optischen Achse transparenten Öffnungen eingebracht ist, wobei einander benachbarte Mikrolinsen quer zur optischen Achse der Mikrolinsen untereinander weitgehend optisch isoliert sind. Auf diese Weise wird im Wesentlichen ebenfalls ein in diesem Falle ungewolltes Übersprechen innerhalb der Kanäle verhindert. In dieser Variante ist die korrekte Überdeckung mehrerer Teilbilder zur Erreichung der erhöhten Lichtstärke beabsichtigt. Licht aus der zweiten Linse des einen Kanals soll nicht in die dritte Linse des Nachbarkanals des darunterliegenden Mikrolinsenarrays, was durch optisch dichte Wände zwischen diesen Mikrolinsenarrays realisiert werden kann. Gleichzeitig werden das erste und zweite Mikrolinsenarray im gewünschten Abstand zueinander fixiert.

Eine andere Alternative der Mikrolinsenanordnung zum Bildsensor ist es, einer Bildsensoreinheit ausschließlich eine Mikrolinse zuzuordnen, wobei eine Bildsensoreinheit vorzugsweise eine einzige Lichtempfindliche Fläche aufweist. Diese Anordnung entspricht im Wesentlichen dem Appositionsprinzip, wobei im Gegensatz zu einem Insektenauge die einzelnen Linsen in einer Ebene angeordnet sind und nicht entlang einer gekrümmten Fläche. Besonders vorteilhaft ist die Anordnung, wenn die optische Achse einer Mikrolinse im Wesentlichen senkrecht auf der ihr zugeordneten lichtempfindlichen Fläche der Bildsensoreinheit steht. Der Vorteil einer derartigen Mikrolinsenanordnung liegt in ihrem sehr einfachen Aufbau, so dass dieser Navigationssensor schnell und kostengünstig z.B. mit lithographischen und Replikationstechnologien im Wafermassstab hergestellt werden kann.

Es ist besonders vorteilhaft, wenn die Vorrichtung zur optischen Navigation eine inkohärente oder kohärente optische Strahlenquelle aufweist, welche dem Bildsensor zugeordnet ist in dem Sinne, dass die Strahlenquelle das auf dem Bildsensor abzubildende Objektfeld bestrahlt. Dies geschieht vorteilhafterweise im Auflichtmodus, d.h. aus dem gleichen Halbraum relativ zu der Tracking-surface (d.h. dem Objektfeld), in dem sich auch das abbildende System befindet. Hierbei ist insbesondere ein Spektrum der Strahlenquelle vorteilhaft, welches sich im sichtbaren Bereich zwischen 350 bis 759 nm bzw. im nahen UV-, bis 200nm, oder nahen Infrarotbereich, bis 1300 nm, bewegt. Dies ist insbesondere dann notwendig, wenn eine gleichmäßige Ausleuchtung des abzubildenden Objektfelds durch natürliche Lichtquellen nicht möglich ist. Im Falle einer inkohärenten Beleuchtung wird vorteilhafterweise eine Leuchtdiode eingesetzt, welche von der Seite unter einem möglichst sehr kleinen Winkel zum abzubildenden Objektfeld angebracht ist, damit die Struktur des Objektfeldes in Schatten resultiert, die dann mittels der Mikrolinsen auf dem Bildsensor abgebildet werden können. Auf diese Weise kann eine Bildinformation bzw. Modulation in eine ansonsten nahezu texturfreie Objektebene gebracht werden. Im Falle einer kohärenten Beleuchtung wird vorteilhafterweise eine Laserdiode eingesetzt, bei welcher ein schräger Einfall der Beleuchtung tolerierbar ist, da durch eine kohärente Streuung ein Specklemuster oberhalb der Objektebene erzeugt wird, welches durch den Bildsensor detektierbar ist. Hierbei ist darauf zu achten, dass die Objektebene der Anordnung nicht mehr die Tracking-surface ist, sondern dass von ihr zurückgestreute bzw. erzeugte Specklefeld. Das Specklefeld bildet sich durch Interferenz benachbarter gestreuter Bündel typischerweise im Abstand von ca. 1mm von der Tracking-surface aus.

Um eine möglichst effiziente Ausleuchtung mittels der Strahlenquellen vorzunehmen, kann die Strahlenquelle mittels einer Umlenkoptik oder einer Kollektoroptik auf das Objektfeld eingestrahlt werden. Auch ist es sinnvoll, in den Bildsensor, beispielsweise zwischen die einzelnen lichtempfindlichen Flächen Lichtleiter einzubringen, welche das Licht in Richtung des abzubildenden Objektfelds auskoppeln.

Die Strahlenquelle und die Bildsensormikrolinsenanordnung werden bevorzugt auf einem gemeinsamen Träger angeordnet, so dass der Träger als gemeinsames Modul ein- und ausbaubar ist. der Träger kann ein elektronisches Bauteil, wie z.B. eine Leiterplatte sein. Auf diese Weise kann die Ausleuchtung eines Objektfelds bereits durch die Anordnung der Beleuchtung zum Bildsensor festgelegt werden.

Vorteilhafterweise besitzt der Bildsensor eine Flächenausdehnung von 0,25 µm² bis 10 mm² bzw. zwischen 100 und 10000 Bildsensoreinheiten, vorzugsweise zwischen 100 und 1000 Bildsensoreinheiten. Auf diese Weise können obgleich der starken Miniaturisierung des Bildsensors bereits gute Ergebnisse beim Anpassen an verschiedene Objektfeldgrößen herbeigeführt werden.

Weitere Merkmale werden in den untergeordneten Ansprüchen aufgeführt.

Im Folgenden soll die erfindungsgemäße Vorrichtung zur optischen Navigation anhand einiger Ausführungsbeispiele und Figuren erläutert werden. Es zeigen
- Fig. 1: erfindungsgemäße Vorrichtung zur optischen Navigation mit Bildsensormikrolinsenarray und Strahlenquelle;
- Fig. 2: Bildsensor mit Mikrolinsenarray als Appositionsbildsensor ausgebildet (die Anordnung gemäß Fig. 2 ist nicht Teil der Erfindung) ;
- Fig. 3: Bildsensor mit Gabor-Superlinse.

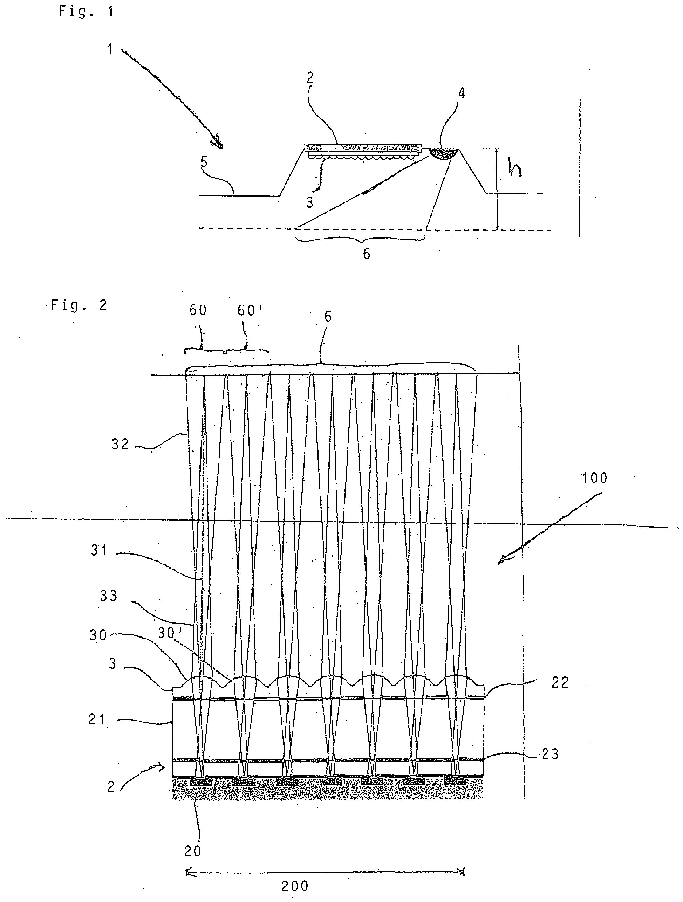

Die Fig. 1 zeigt ein erfindungsgemäßes Eingabegerät 1, wie es z. B. in einer Computermaus oder einer Fernbedienung realisiert sein kann, welches einen Bildsensor 2 aufweist, auf welchem ein Mikrolinsenarray 3 angebracht ist. Des Weiteren ist eine Strahlenquelle 4 in Form einer LED vorhanden, wobei sowohl die Strahlenquelle 4 als auch der Bildsensor 2 auf einem Träger 5 angeordnet sind. Direkt unterhalb des Mikrolinsenarrays 3 befindet sich das Objektfeld 6, welches mit dem Eingabegerät 1 abgetastet wird.

Ein Muster, welches sich im Objektfeld 6 befindet, wird durch die Strahlenquelle 4 ausgeleuchtet, so dass mittels des Mikrolinsenarray 3 ein punktweises Bild auf dem Bildsensor 2 entsteht. Alternativ zu einer LED kann auch eine kohärente Lichtquelle wie beispielsweise eine Laserdiode eingesetzt werden, wobei bei dieser kein Schattenwurf auf dem Objektfeld 6 generiert wird, sondern ein durch Interferenzen des kohärenten Lichtes erzeugtes Specklemuster, welches oberhalb der Tracking-surface sichtbar ist und von dem Bildsensor 2 erfasst werden kann.

Typischerweise besitzt das Objektfeld 6 die gleiche Größe wie der Bildsensor 2 bzw. das Mikrolinsenarray 3, so dass eine 1:1-Abbildung entsteht. Dies hat den Vorteil, dass das Mikrolinsenarray 3 so auf dem Bildsensor angeordnet werden kann, dass die optischen Achsen der Mikrolinsen im Wesentlichen senkrecht auf jeder einzelnen Bildsensoreinheit des Bildsensors 2 stehen. Dies bedeutet insbesondere, dass der Teil eines Objektfeldes 6, welcher auf eine Bildsensoreinheit des Bildsensors 2 abgebildet wird, direkt im Lot unterhalb der Bildsensoreinheit liegt. Zudem lässt sich auf diese Weise eine gleiche Entfernung der Bildsensoreinheiten von den Teilen des Objektfelds 6 herstellen. In der hier gezeigten Darstellung ist der Abstand h zwischen Objektfeld und Bildsensor zwischen 0,5 mm und 2 mm.

Als Träger bietet sich ein elektronisches Bauelement an, welches - nachdem Bildsensor und Beleuchtung auf diesen aufgebracht sind - einfach auf ein Gerät, z.B. eine Maus aufgesteckt wird.

Im Folgenden soll kurz auf die Funktionsweise des erfindungsgemäßen Eingabegeräts 1 eingegangen werden. Der Träger 5 wird über die Ebene, in welcher das Objektfeld 6 liegt, bewegt, so dass der Bildsensor verschiedene Ausschnitte der Ebene wahrnimmt und im Objektfeld aufweist. Der Bildsensor nimmt dabei in schneller Zeitfolge Bilder des abgebildeten Objektfeldes auf, vergleicht diese mit vorher aufgenommenen Bildern und kann so auf diese Weise feststellen, ob sich das Eingabegerät nach links, rechts, vorne oder hinten bewegt hat. Selbstverständlich ist auch der umgekehrte Fall möglich, dass sich nicht das Eingabegerät 1 bewegt, sondern die darunter liegende Ebene. Als Beispiel sei hier ein erfindungsgemäßer Navigationssensor genannt, welcher als Eyetracker eingesetzt wird, d. h. in einer festen Position sitzt und die Bewegungen des Auges aufnimmt, wobei sich das Auge ständig bewegt. Die Bewegung des Auges kann dabei in das Bewegen eines Zeigers oder das Bedienen eines Roboterarms umgesetzt werden. Ähnlich kann der Navigationssensor in einer Fernbedienung eingesetzt werden, wobei Bewegungen der Fernbedienung in Bewegungen eines Cursors auf einem Monitor oder Fernseher umgesetzt werden.

Der hier gezeigte optische Navigationssensor im Eingabegerät 1 ist prädestiniert, um im Wafermaßstab hergestellt zu werden. So ist eine kostengünstige Produktion und Montage möglich. Sowohl der Bildsensor 2 als auch das Mikrolinsenarray 3, als auch deren Verbindung sind im Wafer-Scale-Maßstab herstellbar. Dies gilt einschließlich der Montage der einzelnen Bestandteile zum optischen Navigationssensor. Des Weiteren ist eine Vereinzelung der einzelnen Sensoren (da auf einem Wafer sehr viel mehr Sensoren Platz haben) mittels Wafersägen möglich. Das Vereinzeln ist somit nahezu der letzte Produktionsschritt, wobei es aufgrund von Selbstjustierungseffekten alternativ auch sinnvoll sein kann die Montage elementweise mit einfachen Justier- und Montageautomaten durchzuführen.

Im Folgenden soll auf zwei Varianten der Bildsensormikrolinsenanordnung verwiesen werden, welche für die Erfindung besonders relevant sind.

In Fig. 2 ist eine Bildsensormikrolinsenanordnung, die nicht Teil der Erfindung ist, mit Appositionslinse 100 gezeigt. Zusammen ergeben sie einen optischen Navigationssensor. Der eigentliche Bildsensor 2 weist eine Vielzahl von Bildsensoreinheiten 20' auf, welche Fotodioden oder Detektionspixel beinhalten. An der Anordnung des Bildsensors ist ein strahlendurchlässiges Substrat 21 aus Glas oder Porzellan oder Kunststoff aufgebracht, wobei in dem Substrat ein erstes Lochblendenarray 22 und ein zweites Lochblendenarray 23 vorhanden sind. Oberhalb des ersten Lochblendenarrays 22 befindet sich das Mikrolinsenarray 3 aus Glas oder Kunststoff, welches mit dem Substrat 21 verbunden ist. In dem Mikrolinsenarray 3 befindet sich eine Vielzahl von Mikrolinsen 30, wobei hier einer jeden Mikrolinse 30 genau ein Detektionspixel zugeordnet ist, d. h. eine lichtempfindliche Fläche der Bildsensoreinheit 20. Dabei weist die Vielzahl von Mikrolinsen 30 eine Gesamtbreite 200 auf, welche genauso breit ist wie das abzubildende Objektfeld 6. Die optische Achse 31 einer Mikrolinse 30 steht senkrecht auf der lichtempfindlichen Fläche 20. Das bedeutet insbesondere, dass der Teil 60 des Objektfelds 6 auf das direkt gegenüberliegende Detektorpixel abgebildet wird.

Zwei nebeneinander liegende Mikrolinsen, z. B. 30 und 30', sind dabei so ausgebildet, dass die Teile 60 bzw. 60' des Objektfelds 6, welche die Mikrolinsen auf die dahinter liegenden lichtempfindlichen Flächen abbilden, sich im Wesentlichen nicht überschneiden und zwischen ihnen auch kein Spalt entsteht. Auf diese Weise wird gewährleistet, dass das gesamte Objektfeld 6 in Teilen (z. B. 60, 60') auf die Bildsensoreinheiten aufgelöst abgebildet wird, wobei jede Bildsensoreinheit genau ein Pixel aufweist, und somit auf dem Bildsensor 2 ein aufrechtes Bild generiert wird, im Gegensatz zu einer einzigen großen Linse, bei welcher eine umgekehrte Abbildung gemäß den Gesetzen der geometrischen Optik stattfindet.

In der Fig. 2 sind die optischen Achsen 31 der Mikrolinsen 30 jeweils zu ihren Nachbarlinsen parallel. Dadurch, dass gegenüberliegende Teile des Objektfelds 6 auf die einzelnen lichtempfindlichen Flächen des Bildsensors 2 abgebildet werden, fallen nur Lichtstrahlen aus einem kleinen Winkelbereich auf die lichtempfindliche Fläche 20. Dies soll anhand der Mikrolinse 30, dem von ihr abgebildeten Teil 60 des Objektfelds 6 und der darunter liegenden lichtempfindlichen Fläche 20 erläutert werden.

Aufgrund der Abbildung durch das Mikrolinsenarray 3 und die Abblendung der Rand- und Zwischenbereiche des Mikrolinsenarrays durch das erste Lochblendenarray 22 können nur bestimmte Lichtstrahlen auf die lichtempfindliche Fläche auftreffen. Dies betrifft insbesondere die Lichtstrahlen des Teils 60 des Objektfelds 6, wenn durch die zusätzliche Lochblendenschicht 23 ein Übersprechen von einer Linse auf den Detektorpixel des Nachbarkanals verhindert wird. Dies ist exemplarisch an den Hauptstrahlen der Randbündel 32 gezeigt, welche den Verlauf durch den Mikrolinsenmittelpunkt (bzw. in der Hauptebene: der Kardinalpunkt) darstellen. Diese zeigen an, dass der von einem Kanal aufgenommene Objektbereich genau der über die Bild- und Objektweite der Mikrolinse in die Objektebene projezierten Photodiodengrösse entspricht. Hierbei sei darauf hingewiesen, dass natürlich auch die Randbündel auf die Pixel fokussiert sind. Eingezeichnet sind jedoch nur die Marginalstrahlen für das zentrale Bündel, sowie die Hauptstrahlen für die Randbündel. Den Verlauf der Marginalstrahlen (die Fokussierung) kann man aus dem Verlauf des zentralen Bündels entsprechend ableiten kann. Die Marginalstrahlen 33 für senkrechten Einfall zeigen die abbildende Wirkung der Mikrolinse und wie die Lochblendenarrays 22 und 23 nur bestimmte Bereiche passieren lassen, so dass hiermit wiederum gewährleistet wird, dass die an dem Teil 60 angrenzenden Teilbereiche des Objektfelds 6 durch angrenzende Bildsensoreinheiten abgedeckt werden.

Alternativ zu der in der Fig. 2 gezeigten Mikrolinsenanordnung können die optischen Achsen 31 zum Rand des Sensors hin, also von der Mitte zum linken und rechten Rand hin, sich leicht neigen, so dass keine globale 1:1-Abbildung mehr vorhanden ist und das abgebildete Objektfeld 6 größer ist als der abbildungsrelevante Teil 200 des Bildsensors 2. In diesem Falle muss jedoch sichergestellt werden, dass im gewünschten Arbeitsabstand der einer einzelnen Mikrolinse zugeordnete Objektfeldbereich gerade an den Objektfeldbereich einer Nachbarlinse anschließt, was bedeutet, dass die Kantenlänge eines einer Mikrolinse zugeordneten Objektfeldbereiches größer ist als der Abstand der Mikrolinsen voneinander. Wie in Fig. 1 gezeigt, ist der Arbeitsabstand bzw. Objektabstand erfindungsgemäß in der Größenordnung 0,1 - 1 mm oder allgemein als optischer Navigationssensor 0,1 mm bis einige Meter.

Alternativ kann auf eines der Lochblendenarrays 22 oder 23 verzichtet werden. Dies verringert die Qualität des Bildes leicht, der eigentliche Vorteil der Anordnung jedoch, dass die Mikrolinsen einen gegenüberliegenden Teil des Objektfeldes auf die lichtempfindliche Fläche abbilden, bleibt jedoch erhalten. Dies bedeutet insbesondere, dass der Rand des Objektfeldes 6 durch andere Mikrolinsen übertragen wird als der Teilbereich in der Mitte des Objektfeldes 6. Der Teilbereich in der Mitte fällt jedoch nahezu senkrecht auf mindestens eine Mikrolinse und die zugeordnete Bildsensoreinheit.

Durch eine entsprechend gewählte Zahl von Blendenarrays in axialer Anordnung und entsprechend gewählten Schichtdicken transparenter Zwischenschichten wie hier der Schicht 21 wird ein Übersprechen benachbarter Kanäle, was ansonsten zu Falschlicht und damit zur Reduktion des Signal-Rausch-Verhältnisses führte, weitestgehend unterdrückt. Gleichzeitig soll die Größe und Position der Öffnungen allerdings so sein, dass die Vignettierung des gewünschten Nutzlichtes insbesondere für die Randbündel eines einzelnen optischen Kanals minimal ist.

In der Variante der Fig. 2 und den ihr verwandten Varianten sollten die lichtempfindlichen Flächen 20 deutlich kleiner sein als der Kanalabstand, so dass eine sinnvolle Auflösung erzielt werden kann, was jedoch zu einem reduzierten Füllfaktor der Detektorpixel im Bildsensor und einer vergleichsweise reduzierten Lichtstärke führt. Sinnvollerweise sollten dafür nicht dicht gepackte große Photodioden mit kleinen Blenden abgedeckt werden, sondern die Photodioden sollten von vornherein die entsprechende Kleinheit besitzen und der Platz zwischen den Photodioden sollte für elektronische Schaltkreise zur sinnvollen Bildauslese Signalverstärkung, Erhöhung der Empfindlichkeit, Verbesserung des Signal-Rausch-Verhältnisses, beispielsweise durch "correlated double sampling", oder insbesondere zur Bildvorverarbeitung wie z. B. Kontrastberechnung, Messung der Kontrastrichtung, Bestimmung der Bildverschiebung genutzt werden. Werden alternativ zu dem in Fig. 2 gezeigten Bildsensor einer einzelnen Mikrolinse mehrere Pixel zugeordnet, müssen die jeweils aufgenommenen Teilbilder um 180° gedreht werden, da es nun innerhalb einer einzelnen Bildsensoreinheit zu einem umgekehrten, nicht aufrechten Bild kommt.

Vorteilhafterweise wird der Navigationssensor der Fig. 2 im Wafer-Scale-Maßstab hergestellt. Dies beinhaltet auch die Verbindung von Bildsensor mit Mikrolinsenarray. Weiterhin findet eine UV-Replikation der Mikrolinsen in Polymer auf einem Glassubstrat statt, welches anschliessend mit dem Bildsensor verbunden wird, oder der gesamte oder teilweise Linsenaufbau wird heißgeprägt und anschliessend mit dem Bildsensor verbunden oder der Linsenaufbau wird direkt auf den Bildsensor schichtweise mittels lithographischer Techniken und Repliaktionen aufgebaut/zusammengefügt. Da auf einzelnen Wafern mehrere Bildsensoren Platz haben, werden sie später mittels Wafersäge vereinzelt, jedoch vorteilhafterweise erst nach Fertigstellung des kompletten Schichtaufbaus. Nach der Vereinzelung der Module (dies kann nur die Optik oder gemeinsam mit einem Bildsensor sein) müssen die Seiten, beispielsweise mit absorbierendem Epoxy geschwärzt werden, um die seitliche Einkopplung von Falschlicht durch die Substratsstirnflächen des Substrats 21 zu vermeiden. Bei einer Wafer-Scale-Verbindung mit dem Bildsensor ist eine Rückseitenkontaktierung mittels through-silicon vias vorteilhaft, da man ansonsten die Optikbereiche kleiner auslegen muss als die Bereiche des Bildsensors 2, um die Bonding-Pads noch zur Kontaktierungen freizuhalten. Mittels einer podestartigen Strukturierung der durch das Substrat 21 gebildeten Spacerschicht auf den aktiven Bereich des Bildsensors kann dann verhindert werden, dass beim Sägen der Optik der Bildsensorwafer vorderseitig verletzt wird.

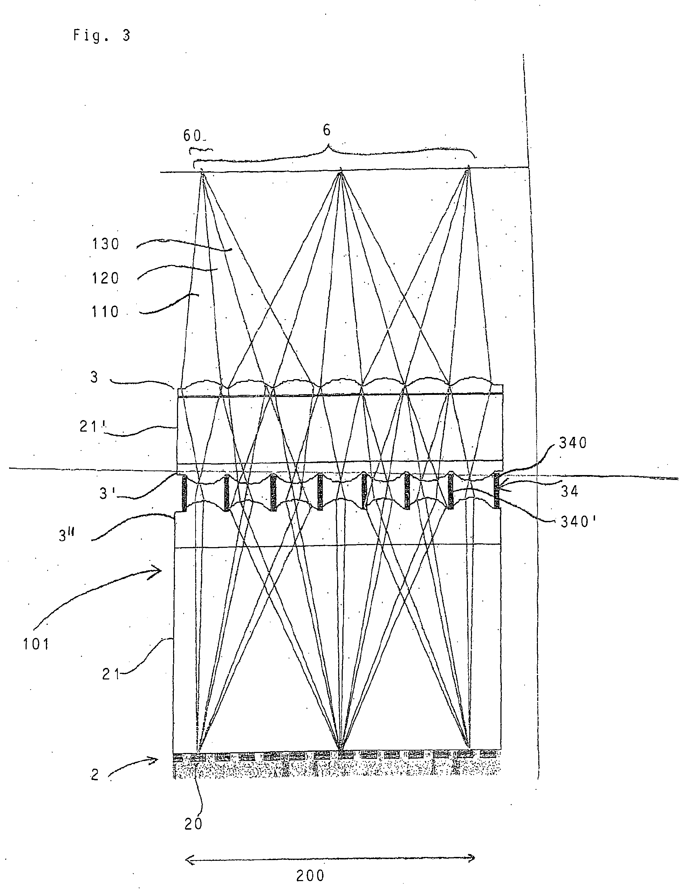

In der Fig. 3 wird eine i Ausgestaltung gemäß der Erfindung vorgestellt, welche im Rahmen der optischen Navigation eingesetzt werden können. Die hier gezeigte Bildsensormikrolinsenanordnung mit Gabor-Superlinse 101 ist deutlich lichtstärker als die Variante der Fig. 2, da hier gleichzeitig mehrere nebeneinander liegende optische Kanäle (welche hierbei aus den Flucht liegenden Mikrolinse der Mikrolinsenarrays 3, 3' und 3" gebildet sind) zur Formation eines Bildpunktes beitragen. In der hier gezeigten Darstellung ist der Abstand des Bildsensors 2 vom Objektfeld 6 ca. 600 µm. Der Aufbau ist analog zu bereits bekannten Gabor-Superlinsen, allerdings bevorzugt ohne eine sonst dort übliche Differenz der Zentrumsabstände der Mikrolinsen, was für die hier vorliegende Abbildungsaufgabe hinreichend ist.

Bei der Gabor-Superlinse mit drei Mikrolinsenrastern 3,3',3'' erzeugt das Mikrolinsenraster 3 ein Zwischenbild, welches durch das Mikrolinsenarray 3'' in die in der Ebene der lichtempfindlichen Flächen liegende Bildebene übertragen wird. Das Mikrolinsenarray 3' fungiert dabei als Feldlinsenarray. Vorzugsweise wird innerhalb der Mikrolinsenarrayanordnung 3,3',3'' eine 1:1 Abbildung erzeugt. In der Bildebene befinden sich zumeist mehrere lichtempfindliche Flächen, wobei zumeist nur eine lichtempfindliche Fläche in der Bildebene eines Kanals angeordnet ist.

Auf dem Bildsensor 2 ist ein Substrat 21 angebracht, beispielsweise aus lichtdurchlässigem Polymer, auf welchem wiederum ein Mikrolinsenarray 3" angeordnet ist. Auf dem Mikrolinsenarray 3" befindet sich ein Abstandshalter 34, welcher in Richtung der optischen Achsen der Kanäle lichtdurchlässig ist, jedoch einander benachbarte optische Kanäle voneinander lichtundurchlässig trennt. Auf dem Abstandshalter 34 ist ein weiteres Mikrolinsenarray 3' angeordnet, welches wiederum mit einem Substrat 21' und einem dritten Mikrolinsenarray 3 verbunden ist. Die Dicken der Mikrolinsenarrays 3, 3', 3" und der Substrate 21, 21' und des Abstandshalters 34 sind dabei so gewählt, dass wie in der Variante der Fig. 2 ein Teil 60 des Objektfelds 6 auf eine gegenüberliegende Bildsensoreinheit 20 abgebildet wird. Allerdings tragen nicht nur die Mikrolinsen bei, welche in der direkten Verbindungslinie zwischen dem Teil 60 des Objektfelds 6 und der Bildsensoreinheit 20 liegen, sondern auch Mikrolinsen benachbarter Kanäle. Die Bilder sind dabei aufrecht und aufgrund des Optikdesigns deckungsrichtig überlagert.

Alternativ ist auch ein Aufbau mit nur zwei Mikrolinsenarrays denkbar, wobei die Bildebene des objektfeldnächsten Mikrolinsenarrays, die so genannte Zwischenbildebene, die Objektebene des dann zweiten Mikrolinsenarrays ist. Das wie in der Fig. 3 gezeigte zusätzlich angebrachte dritte Mikrolinsenarray (hier durch das Mikrolinsenarray 3' gegeben) ist geeignet, alles Licht aus den Aperturen der Linsen des ersten Mikrolinsenarrays 3 in den Aperturen der Linsen des zweiten Mikrolinsenarrays 3" abzubilden.

Der hier gezeigte Navigationssensor zeigt ein aufrechtes Bild, um zu gewährleisten, dass die verschiedenen Teilbereiche des Objektfelds 6 z.B. 1:1 lage- und orientierungsrichtig (d.h. in Überdeckung) auf die einzelnen Photodioden 20 übertragen werden. Ein optischer Kanal wird hierbei durch die in Flucht angebrachten Mikrolinsen der Mikrolinsenarray 3, 3', 3" gebildet (d.h. das mehrere optische Kanäle nebeneinander liegen), und ein Teilbereich des Objektfeldes 6 wird gleichzeitig durch mehrere Kanäle übertragen. Jedoch können die Teilbereiche des Objektfeldes 6, welche auf unterschiedliche lichtempfindliche Flächen übertragen werden, voneinander disjunkt sein. (Kommentar: Wenn ich Ihren Kommentar richtig verstanden habe, dann müsste das obige jetzt stimmen)

Der optisch isolierende Abstandshalter 34 verhindert ein ungewolltes Übersprechen zwischen der zweiten und dritten Linse benachbarter Kanäle. Der Bildsensor und bzw. eine nachgeschaltete Elektronik (hier nicht eingezeichnet) verrechnen nachfolgend aufgenommene Bilder in eine Zeigerbewegung beispielsweise auf einem Display. Die Zwischenbildweite und damit Substratdicke 21' und die Bildweite und damit Substratdicke des zweiten Substrats 21, wie auch der Abstand von zweiter und dritter Linse ergeben sich aus den Brennweiten und Brennweitenverhältnissen der Mikrolinsen, deren axialen Abständen und dem Abstand des Objektfelds bzw. eines Specklefelds im Falle einer kohärenten Beleuchtung zu dem Mikrolinsenarray 3, sowie der Grösse des Kanalabstandes für eine Unterdrückung von Übersprechen von der ersten Linse eines Kanals auf die zweite Linse des Nachbarkanals durch das erste Substrat 21'.

In der hier gezeigten Variante ist der Pitch der Linsen gleich, so dass eine 1:1-Abbildung entsteht. Dieser kann jedoch auch unterschiedlich sein, was dann in einer vergrößerten oder verkleinerten Abbildung resultieren kann, je nachdem ob das Linsenarray mit dem größeren Pitch bild- oder objektseitig in der Optik angebracht ist und wie das Verhältnis von Objekt- und Bildweite ist. Daraus resultieren geneigte optisehe Achsen, die durch die Linsenkanäle entsprechend Objekt- und Teilteile miteinander verbinden.

Der optisch isolierende Abstandshalter 34 weist die Form eines Siebes auf. Er besteht aus einer Lochmatrix in einer Platte, welche zwischen 10 µm und 500 µm dick ist, wobei der Durchmesser der Löcher kleiner ist als deren Abstand und die senkrecht resultierenden Stege entweder durch die Materialwahl der Platte oder durch die nachträgliche Beschichtung lichtundurchlässig sind, so dass keine optische Verbindung zwischen benachbarten Kanälen auftreten.

Des Weiteren hilft der Abstandshalter bei der Selbstzentrierung der zwei Substrate bzw. der aufliegenden Mikrolinsenarrays zueinander, wodurch eine sehr einfache und doch genaue Justage der Elemente der Optik zueinander möglich wird. Der Pitch und die Anordnung der Löcher ist dabei die gleiche wie die der aufliegenden Mikrolinsenarrays. Somit sind auch Durchmesser der Löcher kleiner oder gleich denen der aufliegenden Linsen, so dass die Linsen auf den Substraten beidseitig in die Löcher einrasten, was eine bevorzugte Form der lateralen und axialen Justage bildet. Die Dicke der Platte folgt aus dem notwendigen Abstand des als Feldlinsen fungierenden Mikrolinsenarrays 3' zum zweiten Mikrolinsenarray 3" unter Berücksichtigung notwendiger Kleberdicke. Montiert werden kann die Anordnung mit einfachen Pick-and-place-Robotern.

Es gibt in dieser Anordnung keine allgemeingültige feste Zuordnung eines optischen Kanals zu einem darunter liegenden Detektorpixel, da ein reguläres, geschlossenes Bild erzeugt wird, das heißt, dass selbst bei quadratischer Anordnung der Detektorpixel die Anordnung der optischen Linsenkanäle z. B. auch hexagonal sein kann, um eine möglichst hohe Packungsdichte der Kanäle und damit Lichtstärke zu erzielen. Dementsprechend muss die Pixelgröße und Pixelzahl des Bildsensors nicht auf die Kanalanzahl und Kanalgröße abgestimmt sein. Es kann also in dieser Variante der Fig. 3 auch ein herkömmlicher Bildsensor 2 mit dicht gepackten Detektorpixeln eingesetzt werden.

Die Größe des Zwischenbildes wird im Wesentlichen durch die Dicke des Substrats 21' definiert. Hierbei ist es vorteilhafterweise so, dass die Größe des Zwischenbildes möglichst klein gegenüber dem Kanalabstand ist, so dass ein Objektpunkt gleichzeitig von möglichst vielen optischen Kanälen übertragen werden kann. Dies bedeutet insbesondere, dass die Brennweite des ersten Mikrolinsenarrays 3 möglichst kurz sein soll. Die Krümmungsradien der Linsen der drei Linsenarrays können im Allgemeinen unterschiedlich sein. Auch dann wird bei geeigneter Wahl der Abstände und Brennweitenverhältnisse noch eine 1:1-Abbildung innerhalb eines Kanals erreicht. Der Pitch der drei Linsenarrays muss allerdings für eine globale 1:1-Abbildung gleich sein. Man nutzt mit der Variante der Fig. 3 also eine große "Superpupille", die sich idealerweise nahezu über das gesamte Mikrolinsenarray erstrecken kann, also effektiv einen zur Objektpunktübertragung beitragenden Linsendurchmesser, der dem einer konventionellen Miniaturlinse entspricht, ohne aber für die äußeren Objektbereiche einen schiefen Strahldurchgang in Kauf nehmen zu müssen.

Am Objektrand tragen nun jeweils andere Kanäle als zentrale und Randkanäle bei als in der Objektmitte, es findet sich durch die arrayhafte Fortsetzung aber stets ein Kanal, der den Objektpunkt unter nahezu senkrechtem Einfall überträgt und die benachbarten, noch in der Superpupille liegenden, Kanäle dann entsprechend unter leicht erhöhten Winkeln.

Vorzugsweise wird das Gesamtsystem durch Stapeln im Wafer-Scale-Maßstab oder durch elementweises mechanisches Selbstjustieren nur der Optik und eine nachfolgende grobe laterale Ausrichtung zum Bildsensor und Verkleben erreicht. Eine Vereinzelung der Module zieht eine Schwärzung der Seiten beispielsweise mit absorbierendem Epoxy nach sich, wie bereits in Fig. 2 beschrieben. Der Abstandshalter wird einem Prägestanz- oder Ätzprozess hergestellt, oder gebohrt, auch ein lithographischer Strukturierungsprozess wie beispielsweise ein SU8-Photolack auf einem Trägersubstrat ist möglich. Die dadurch entstehende Lochfolie wird anschließend geschwärzt. Falls die Löcher nicht durch das Substrat durchstrukturiert werden können, kann durch rückseitiges Schleifen und Polieren der Lochplatte bzw. Folie erreicht werden, dass die Löcher sich vollständig öffnen und die Stirnflächen die entsprechend notwendige Oberflächenqualität besitzen.

**Bezugszeichen:**

| | |
|---|---|
| Eingabegerät | 1 |
| Bildsensorarray | 2 |
| Mikrolinsenarray | 3,3', 3" |
| Strahlenquelle | 4 |
| Träger | 5 |
| Objektfeld | 6 |
| Bildsensoreinheit | 20 |
| Strahlendurchlässiges Substrat | 21, 21' |
| Erstes Lochblendenarray | 22 |
| Zweites Lochblendenarray | 23 |
| Mikrolinse | 30 |
| Optische Achse | 31 |
| Hauptstrahlen | 32 |
| Marginalstrahlen | 33 |
| Abstandshalter | 34 |
| Objektfeldausschnitt | 60, 60' |
| Bildsensor mit Appositionslinse | 100 |
| Bildsensor mit Gabor-Superlinse | 101 |
| Erster Strahlengang | 110 |
| Zweiter Strahlengang | 120 |
| Dritter Strahlengang | 130 |
| Blickfeld | 200 |
| Trennwand | 340, 340' |

## Patentansprüche

1. Vorrichtung zur optischen Navigation, enthaltend ein Bildsensorarray (2) mit einer Vielzahl von arrayartig angeordneten Bildsensoreinheiten (20,20') mit jeweils mindestens einer lichtempfindlichen Fläche sowie
mindestens einem dem Bildsensorarray zugeordneten und zwischen einem abzubildenden Objekt (6) und dem Bildsensorarray angeordneten Mikrolinsenarray (3, 3',3"), wobei jeder Bildsensoreinheit (20) mindestens eine Mikrolinse (30) zugeordnet ist,
wobei die Mikrolinsen (30) derart zueinander ausgerichtet sind, so dass die optische Achsen der Mikrolinsen parallel verlaufen, oder die Mikrolinsen (30) derart ausgerichtet sind, dass die optischen Achsen der Mikrolinsen im Zentrum des Bildsensorarrays (2) senkrecht auf der mindestens einen zugeordneten lichtempfindlichen Fläche stehen und vom Zentrum zu einem Rand hin die optischen Achsen der Mikrolinsen zunehmend schräg auf der zugeordneten lichtempfindlichen Fläche stehen, wobei das Bildsensorarray (2) über ein optisch durchlässiges Substrat (21, 21') mit dem mindestens einen Mikrolinsenarray (3, 3', 3") verbunden ist und dem Bildsensorarray (2) mindestens ein Lochblendenarray zugeordnet ist, das zwischen Bildsensorarray (2) und Mikrolinsenarray (3, 3',3") angeordnet ist,
**dadurch gekennzeichnet, dass**
i) das mindestens eine Mikrolinsenarray (3, 3', 3") und das Bildsensorarray (2) zumindest bereichsweise über Abstandshalter (34) miteinander verbunden sind, wobei die Abstandshalter (34) in Richtung der optischen Achsen der Kanäle lichtdurchlässig sind, jedoch einander benachbarte optische Kanäle voneinander lichtundurchlässig trennen; oder
ii) die Mikrolinsen (30) in mindestens zwei Mikrolinsenarrays (3', 3") angeordnet sind, wobei jeweils mindestens eine Mikrolinse eines ersten Mikrolinsenarrays (3') in Flucht mit mindestens einer Mikrolinse eines zweiten Mikrolinsenarrays (3") liegt und wobei zwischen dem ersten Mikrolinsenarray (3') und dem zweiten Mikrolinsenarray (3") ein Abstandsarray mit in Richtung der optischen Achse transparenten Öffnungen eingebracht ist, wobei einander benachbarte Mikrolinsen (30) quer zur optischen Achse der Mikrolinsen (30) untereinander durch optisch dichte Wände (34) zwischen den mindestens zwei Mikrolinsenarrays (3', 3") weitgehend optisch isoliert sind.

2. Vorrichtung zur optischen Navigation nach einem der vorhergehenden Ansprüche, **dadurch gekennzeichnet, dass** die Mikrolinsen (30) derart ausgebildet sind, dass ein auf einer ersten Bildsensoreinheit abgebildeter Objektausschnitt (60) von einem auf einer zweiten Bildsensoreinheit abgebildeten Objektausschnitt (60') disjunkt ist.

3. Vorrichtung zur optischen Navigation nach einem der vorhergehenden Ansprüche, **dadurch gekennzeichnet, dass** die Mikrolinsen (30) in drei (3,3',3") Mikrolinsenarrays angeordnet sind, wobei jeweils mindestens eine Mikrolinse eines ersten Mikrolinsenarrays in Flucht mit mindestens einer Mikrolinse eines zweiten Mikrolinsenarrays, vorzugsweise eines zweiten und dritten Mikrolinsenarrays, liegt.

4. Vorrichtung zur optischen Navigation nach Anspruch 1, **dadurch gekennzeichnet, dass** das erste Mikrolinsenarray ein Zwischenbild erzeugt, welches durch das zweite Mikrolinsenarray auf eine gemeinsame Bildebene abgebildet wird, wobei ein weiteres Mikrolinsenarray zwischen dem ersten und zweiten Mikrolinsenarray als Feldlinsenarray eingesetzt ist.

5. Vorrichtung zur optischen Navigation nach Anspruch 4, **dadurch gekennzeichnet, dass** durch die Anordnung der Mikrolinsen eine Gabor-Superlinse (101) gebildet ist.

6. Vorrichtung zur optischen Navigation nach einem der Ansprüche 1 oder 2, **dadurch gekennzeichnet, dass** eine Bildsensoreinheit (20) genau eine lichtempfindliche Fläche aufweist und genau einer Mikrolinse (30) zugeordnet ist, wobei die optische Achse im Wesentlichen senkrecht auf der lichtempfindlichen Fläche steht.

7. Vorrichtung zur optischen Navigation nach einem der vorhergehenden Ansprüche, **dadurch gekennzeichnet, dass** dem Bildsensorarray mindestens eine inkohärente oder kohärente optische Strahlungsquelle (4) zugeordnet ist und die Strahlungsquelle (4) das abzubildende Objekt (6) bestrahlt.

8. Vorrichtung zur optischen Navigation nach Anspruch 7, **dadurch gekennzeichnet, dass** die optische Strahlungsquelle (4) eine Leuchtdiode oder eine Laserdiode ist.

9. Vorrichtung zur optischen Navigation nach einem der Ansprüche 7 oder 8, **dadurch gekennzeichnet, dass** die Strahlungsquelle (4) das Objekt direkt oder mittels einer Umlenkoptik und/oder einer Kollektoroptik oder mittels in Richtung des Objekts auskoppelnden Lichtleitern bestrahlt.

10. Vorrichtung zur optischen Navigation nach einem der Ansprüche 7 bis 9, **dadurch gekennzeichnet, dass** das Bildsensorarray (2) und/oder die Strahlungsquelle (4) auf einem Träger (5) angeordnet sind.

11. Vorrichtung zur optischen Navigation nach Anspruch 10, **dadurch gekennzeichnet, dass** zwischen dem Träger (5) und dem Bildsensorarray (2) und/oder der Strahlungsquelle (4) zusätzliche Substratschichten, vorzugsweise aus Silikon und/oder PCB und/oder Kunststoff, angeordnet sind.

12. Vorrichtung zur optischen Navigation nach einem der vorhergehenden Ansprüche, **dadurch gekennzeichnet, dass** der Bildsensor (2) eine Flächenausdehnung von 0,25 µm² bis 10 mm² besitzt;

13. Vorrichtung zur optischen Navigation nach einem der vorhergehenden Ansprüche, **dadurch gekennzeichnet, dass** der Bildsensor (2) von 100 bis 10.000, insbesondere von 100 bis 1.000 Bildsensoreinheiten aufweist.

14. Eingabegerät für eine Datenverarbeitungsanlage, vorzugsweise eine Computermaus oder eine Fernbedienung oder eine Konsolensteuerungsvorrichtung, **dadurch gekennzeichnet, dass** eine Vorrichtung zur optischen Navigation nach einem der vorhergehenden Ansprüche vorhanden ist.

15. Verwendung einer Vorrichtung zur optischen Navigation nach einem der vorhergehenden Ansprüche zur Steuerung eines Cursors auf einem Bildausgabegerät mittels einer relativen Bewegung zwischen Bildsensor und abzubildendem Objekt.

## Claims

1. Device for optical navigation, including
an image sensor array (2) having a plurality of image sensor units (20, 20') arranged in an array-like manner and having at least one respective light-sensitive surface and
having at least one microlens array (3, 3', 3") associated with the image sensor array and arranged between an object (6) to be imaged and the image sensor array, wherein at least one microlens (30) is associated with each image sensor unit (20);
wherein the microlenses (30) are aligned with respect to one another such that the optical axes of the microlenses extend in parallel, or the microlenses (30) are aligned such that the optical axes of the microlenses are perpendicular to the at least one associated light-sensitive surface at the center of the image sensor array (2) and the optical axes of the microlenses are increasingly slanted on the associated light-sensitive surface from the center toward a margin, and wherein the image sensor array (2) is connected via an optically transparent substrate (21, 21') to the at least one microlens array (3, 3', 3") and at least one pinhole aperture array that is arranged between the image sensor array (2) and the microlens array (3, 3', 3") is associated with the image sensor array (2),
**characterized in that**
i) the at least one microlens array (3, 3', 3") and the image sensor array (2) are connected at least regionally to one another via spacers (34), with the spacers (34) being light-permeable in the direction of the optical axes of the channels, but separate mutually adjacent optical channels from one another in a light-impermeable manner; or
ii) the microlenses (30) are arranged in at least two microlens arrays (3' 3"), wherein at least one respective microlens of a first microlens array (3') is in alignment with at least one microlens of a second microlens array (3"), and wherein a spacer array having apertures transparent in the direction of the optical axis is introduced between the first microlens array (3') and the second microlens array (3"), with mutually adjacent microlenses (30) being largely optically isolated between one another transversely to the optical axis of the microlenses (30) by optically opaque walls (34) between the at least two microlens arrays (3', 3").

2. Device for optical navigation in accordance with one of the preceding claims, **characterized in that** the microlenses (30) are configured such that an object section (60) imaged on a first image sensor unit is disjunct from an object section (60') imaged on a second image sensor unit.

3. Device for optical navigation in accordance with one of the preceding claims, **characterized in that** the microlenses (30) are arranged in three (3, 3', 3") microlens arrays, with at least one respective microlens of a first microlens array being in alignment with at least one microlens of a second microlens array, preferably of a second and third microlens array.

4. Device for optical navigation in accordance with claim 1, **characterized in that** the first microlens array generates an intermediate image that is imaged on a common image plane by the second microlens array, with a further microlens array being inserted as a field lens array between the first and second microlens array.

5. Device for optical navigation in accordance with claim 4, **characterized in that** a Gabor superlens (101) is formed by the arrangement of the microlenses.

6. Device for optical navigation in accordance with one of the claims 1 or 2, **characterized in that** an image sensor unit (20) has exactly one light-sensitive surface and is associated with exactly one microlens (30), with the optical axis being substantially perpendicular to the light-sensitive surface.

7. Device for optical navigation in accordance with one of the preceding claims, **characterized in that** at least one incoherent or coherent optical radiation source (4) is associated with the image sensor array and the radiation source (4) irradiates the object (6) to be imaged.

8. Device for optical navigation in accordance with claim 7, **characterized in that** the optical radiation source (4) is a light emitting diode or a laser diode.

9. Device for optical navigation in accordance with one of the claims 7 or 8, **characterized in that** the radiation source (4) irradiates the object directly or by means of a deflection optics and/or a collector optics or by means of light guides decoupling in the direction of the object.

10. Device for optical navigation in accordance with one of the claims 7 to 9, **characterized in that** the image sensor array (2) and/or the radiation source (4) are arranged on a carrier (5).

11. Device for optical navigation in accordance with claim 10, **characterized in that** additional substrate layers, preferably of silicone and/or PCB and/or plastic, are arranged between the carrier (5) and the image sensor array (2) and/or the radiation source (4).

12. Device for optical navigation in accordance with one of the preceding claims, **characterized in that** the image sensor (2) has an areal extent of 0.24 µm² to 10 mm^{2.}

13. Device for optical navigation in accordance with one of the preceding claims, **characterized in that** the image sensor (2) has from 100 to 10,000 image sensor units, in particular from 100 to 1,000 image sensor units.

14. Input device for a data processing unit, preferably a computer mouse or a remote control or a console control device, **characterized in that** an device for optical navigation in accordance with one of the preceding claims is present.

15. Use of a device for optical navigation in accordance with one of the preceding claims for controlling a cursor on an image output device by means of a relative motion between the image sensor and the object to be imaged.

## Revendications

1. Dispositif de navigation optique, comprenant
une matrice de capteurs d'images (2) avec une pluralité d'unité de capteurs d'images (20, 20') disposées sous la forme d'une matrice, avec chacune au moins une surface photosensible, ainsi que
au moins une matrice de micro-lentilles (3, 3', 3") correspondant à la matrice de capteurs d'images et disposée entre un objet à représenter (6) et la matrice de capteurs d'images, au moins une micro-lentille (30) correspondant à chaque unité de capteur d'image (20),
les micro-lentilles (30) étant orientées les unes par rapport aux autres de façon à ce que les axes optiques des micro-lentilles soient parallèles ou les micro-lentilles (30) étant orientées de façon à ce que les axes optiques des micro-lentilles soient verticaux, au centre de la matrice de capteurs d'images (2), sur l'au moins une surface photosensible correspondante et à ce que, du centre vers un bord, les axes optiques des micro-lentilles soient de plus en plus inclinés sur la surface photosensible correspondante, la matrice de capteurs d'images (2) étant reliée par l'intermédiaire d'un substrat optiquement transparent (21, 21') avec l'au moins une matrice de micro-lentilles (3, 3', 3") et au moins une matrice de diaphragmes à trous, disposée entre la matrice de capteurs d'images (2) et la matrice de micro-lentilles (3, 3', 3"), correspondant à la matrice de capteurs d'images (2),
**caractérisé en ce que**
i) l'au moins une matrice de micro-lentilles (3, 3', 3") et la matrice de capteurs d'images (2) étant reliées entre elles, au moins à certains endroits, par l'intermédiaire d'entretoises (34), les entretoises (34) étant transparentes à la lumière en direction des axes optiques des canaux, mais séparant des canaux optiques adjacents entre eux de manière opaque ; ou
ii) les micro-lentilles (30) sont disposées en au moins deux matrices de micro-lentilles (3', 3"), au moins une micro-lentille d'une première matrice de micro-lentilles (3') étant alignée avec au moins une micro-lentille d'une deuxième matrice de micro-lentilles (3") et, entre la première matrice de micro-lentilles (3') et la deuxième matrice de micro-lentilles (3"), une matrice d'écartement, avec des ouvertures transparentes dans la direction de l'axe optique, étant insérée, des micro-lentilles (30) adjacentes entre elles étant largement isolées optiquement entre elles transversalement à l'axe optique des micro-lentilles (30) par des parois optiquement étanches (34) entre les au moins deux matrices de micro-lentilles (3', 3").

2. Dispositif de navigation optique selon l'une des revendications précédentes, **caractérisé en ce que** les micro-lentilles (30) sont conçues de façon à ce qu'une partie d'objet (60) représentée sur une première unité de capteur d'image soit distincte d'une partie d'objet (60') représentée sur une deuxième unité de capteur d'image.

3. Dispositif de navigation optique selon l'une des revendications précédentes, **caractérisé en ce que** les micro-lentilles (30) sont disposées en trois matrices de micro-lentilles (3, 3', 3"), au moins une micro-lentille d'une première matrice de micro-lentilles étant alignée avec au moins une micro-lentille d'une deuxième, de préférence d'une deuxième et d'une troisième matrice de micro-lentilles.

4. Dispositif de navigation optique selon la revendication 1, **caractérisé en ce que** la première matrice de micro-lentilles génère une image intermédiaire qui est reproduite par la deuxième matrice de micro-lentilles sur un plan d'image commun, une autre matrice de micro-lentilles étant insérée entre les première et deuxième matrices de micro-lentilles sous la forme d'une matrice de lentilles de champ.

5. Dispositif de navigation optique selon la revendication 4, **caractérisé en ce qu'**une super-lentille de Gabor (101) est formée par la disposition des micro-lentilles.

6. Dispositif de navigation optique selon l'une des revendications 1 ou 2, **caractérisé en ce qu'**une unité de capteur d'image (20) comprend exactement une surface photosensible et correspond exactement à une micro-lentille (30), l'axe optique étant globalement vertical sur la surface photosensible.

7. Dispositif de navigation optique selon l'une des revendications précédentes, **caractérisé en ce que**, à la matrice de capteurs d'images, correspond au moins une source de rayonnement optique incohérente ou cohérente (4) et la source de rayonnement (4) irradie l'objet (6) à représenter.

8. Dispositif de navigation optique selon la revendication 7, **caractérisé en ce que** la source de rayonnement optique (4) est une diode électroluminescente ou une diode laser.

9. Dispositif de navigation optique selon l'une des revendications 7 ou 8, **caractérisé en ce que** la source de rayonnement optique (4) irradie l'objet directement ou par l'intermédiaire d'une optique de déviation et/ou d'une optique à collecteur ou à l'aide de fibres optiques sortant en direction de l'objet.

10. Dispositif de navigation optique selon l'une des revendications 7 à 9, **caractérisé en ce que** la matrice de capteurs d'images (2) et/ou la source de rayonnement (4) sont disposées sur un support (5).

11. Dispositif de navigation optique selon la revendication 10, **caractérisé en ce que**, entre le support (5) et la matrice de capteurs d'images (2) et/ou la source de rayonnement (4), sont disposées des couches de substrats supplémentaires, de préférence en silicone et/ou PCB et/ou matière plastique.

12. Dispositif de navigation optique selon l'une des revendications précédentes, **caractérisé en ce que** le capteur d'image (2) présente une superficie de 0,25 µm² à 10 mm^{2.}

13. Dispositif de navigation optique selon l'une des revendications précédentes, **caractérisé en ce que** le capteur d'image (2) comprend de 100 à 10 000, plus particulièrement de 100 à 1 000 unités de capteurs d'images.

14. Appareil d'entrée pour une installation de traitement de données, de préférence une souris d'ordinateur ou une commande à distance ou un dispositif de commande à console, **caractérisé en ce qu'**un dispositif de navigation selon l'une des revendications précédentes est prévu.

15. Utilisation d'un dispositif de navigation optique selon l'une des revendications précédentes pour le contrôle d'un curseur sur un appareil de sortie d'image au moyen d'un mouvement relatif entre le capteur optique et l'objet à représenter.
